**Europäisches Patentamt**

(19) **European Patent Office**

**Office européen des brevets**

(11) Publication number: **0 145 354**
**B1**

(12) **EUROPEAN PATENT SPECIFICATION**

(45) Date of publication of patent specification: **13.09.89**

(21) Application number: **84308016.9**

(22) Date of filing: **20.11.84**

(51) Int. Cl.⁴: **E 06 B 3/62,** B 60 J 1/10, B 60 R 13/06

(54) **Molded urethane window gasket assembly with hinge member and apparatus and method for making same.**

(30) Priority: **12.12.83 US 560603**

(43) Date of publication of application:
**19.06.85 Bulletin 85/25**

(45) Publication of the grant of the patent:
**13.09.89 Bulletin 89/37**

(84) Designated Contracting States:
**AT DE FR GB IT SE**

(56) References cited:
**EP-A-0 076 924**
**DE-A-2 855 050**
**DE-B-1 509 278**
**GB-A-2 115 049**
**US-A-3 659 896**

(73) Proprietor: **SHELLER-GLOBE CORPORATION**
**1505 Jefferson Avenue**
**Toledo Ohio 43624 (US)**

(72) Inventor: **Sanok, John Leo**
**28594 Chatham**
**Grosse Isle Michigan 48138 (US)**
Inventor: **Adam, David Gordon**
**2850 Secretariat**
**Toledo Ohio 43615 (US)**

(74) Representative: **Barlow, Roy James et al**
**J.A.KEMP & CO. 14, South Square Gray's Inn**
**London WC1R 5EU (GB)**

Courier Press, Leamington Spa, England.

## Description

The invention relates generally to molded window gaskets and to the reaction injection molding of such articles from a multi-constituent material in a mold cavity. More particularly, the invention relates to such gaskets for automotive applications and to equipment and methods of reaction injection molding of such articles, wherein the elastomeric urethane window gaskets are integrally molded and securely bonded onto a window panel of glass or other transparent material and include living hinge members incorporated therein. Reference is made to the related copending applications "Molded Window Gasket Assembly and Apparatus and Method for Making Same", serial No. 505,196, filed on June 17, 1983, and "Molded Window Gasket Assembly and Apparatus and Method for Making and Bonding Same", filed of even date herewith, both of which are assigned to the same assignee as the present invention. The disclosures of said related copending applications are hereby incorporated herein by reference.

It has been known in the past to fabricate articles such as modular vehicular window gaskets, having hinge members or portions therein, from materials such as polyvinylchloride (PVC) using conventional compression or injection molding techniques. Some of such window gaskets have been injection molded directly onto the window panel, which is made of glass or other substantially transparent material. The window and gasket assemblies have then been installed in a vehicle or other window frame with adhesives and/or with integrally molded fastener protrusions, as disclosed, for example, in United States Patent No. 4,072,340, and with hinge members therein as disclosed in United States Patent No. 4,139,234. It has been found, however, that window panel breakage has been unacceptably high in such prior processes because of the high pressures required in the injection moulding process and because of the hardness and rigidity of the mould structures involved. Additionally, because of the types of materials previously used in moulding the gaskets, such as rubber or polyvinylchloride (PVC), it has been found that proper adhesion of such gaskets to metal body panels and to glass window panels has been difficult to attain, thereby resulting in water leaks, wind noise, and other related problems, as well as requiring the use of mechanical fasteners to secure the assemblies to the body panels.

In accordance with the present invention, improved apparatuses and methods of reaction injection moulding articles such as vehicular window gasket assemblies are provided in order to overcome the above-discussed disadvantages. Such methods and apparatus allow window gasket assemblies to be reaction injection moulded from multi-consistuent materials, such as urethane, for example, and to be moulded at relatively low pressures and securely bonded directly onto the glass or other transparent window panels.

The above-mentioned US—A—4 139 234 discloses a window assembly in accordance with the prior art portion of claim 1. As indicated, this prior construction is inconvenient because of the breakages which tend to occur in manufacture and the difficulty of securing the gasket to a body frame without the use of mechanical fasteners. The present invention, as characterised in claim 1, has more flexible gasket members which are softer such that they can readily be secured reliably in position by use of adhesive without fasteners, being made of a multi-constituent urethane material which can also serve to provide a reliable hinge, the multi-constituent material being integrally reaction injection moulded under relatively low pressure conditions such that there is a reduced chance of breakage of window panels during manufacture.

The prior art portions of the method of claim 6 and the system of claim 17 are also based upon the disclosure of US—A—4 139 234 with the benefits arising from the reaction injection moulding of the multi-constituent material to form the gasket referred to above and with the additional benefit arising from the provision of the flexible portions of the moulding apparatus as elastomeric members which are suitable under the relatively low pressure conditions provided by reaction injection moulding such that allowance can be made for minor variations in the shape or contour of the window panel or panels as characterised in claims 6 and 17 such that there is a reduced tendency of breakage of the glass panels.

In one embodiment, the gasket assembly comprises two integrally moulded fixed gasket members with the hinge web interconnectably extending therebetween. A fixed one of said gasket members is adapted to be bonded and secured directly to the vehicle body with adhesives without the need for mechanical fastener devices, thereby simplifying the installation process and making it better suited for robotic or other automated equipment. Because of the incorporation of the flexible living hinge web integrally moulded into the gasket assembly such ease of installation is also attainable in window arrangements such as rear quarter windows and folding convertible top windows, for example, wherein at least one window panel must be pivotally movable relative to the vehicle body. All or a portion of the urethane gasket can also be coated with a pigmented decorative material in the mold cavity if desired.

The gasket assembly according to the present invention may also be fabricated with a lower cross-sectional profile, thereby providing for an advantageous, aerodynamically smooth fit between the window assembly and the body panel. Such lower profile also requires less offset or other forming of the body panel area surrounding the window opening, thus simplifying the body panel fabrication and increasing the design flexibility for such body panels. Also because in at least some embodiments of the invention the gasket and window assembly is preferably bonded and secured to the body panel substantially continuously around the window opening periphery, the localized stress concentrations caused by spaced, discrete mechanical fasteners are substantially avoided and the bonding and securing forces are more evenly distributed. Such modular window structure, with its strong and preferably continuous, peripheral bond allows the window panel to effectively contribute to the structural integrity of the installation, and also to allow for a reduction in window panel thickness and weight.

The strong and secure bond between the urethane gasket member and the preferably glass window panel is achieved by a novel method whereby the bonding occurs simultaneously with the molding process. Generally speaking the preferred bonding method includes the steps of applying a primer material, by spraying or wiping, to at least the peripheral portions of the window panel, allowing the primer to air dry for a relatively short period of time, and inserting at least the peripheral portions into the mold cavity. A flowable urethane, or urethane-containing, multi-constituent material is then injected or otherwise introduced into the mold cavity where the gasket member is allowed to at least partially cure.

In a preferred embodiment of the present invention, an aftermixer apparatus for use in a reaction injection molding system includes a mixing body having at least one common inlet passageway for receiving a multi-constituent urethane material in a pressurized flowable state. The apparatus includes a number of mixing passageways adapted to receive the material from the common inlet passageway and separate it into a corresponding number of material flow streams. A common mixing cavity in fluid communication with the mixing passageways reunites the separated flow streams and conveys the material into a gating device for introduction into the mold cavity. Adjustment means is provided for selectively altering the size of the common mixing cavity and the size of its inlets in order to selectively alter the back-pressure exerted on the material flowing therethrough. Such adjustment feature allows for the optimization of the back-pressure and thus the intermixing of the constituents of the material for a given flow rate and inlet pressure thereof. Preferably, the mixing passageways each extend along a generally serpentine path including at least one bight portion adapted to cause the material flowing therethrough to substantially reverse its direction of flow in order to increase turbulence and enhance the mixing of the material constituents.

At least a portion of the preferred mold cavity of the reaction injection molding system includes one or more elongated elastomeric members positioned generally adjacent the peripheral edge of the mold cavity for supportingly engaging the mold members and the window panel. The flexible elongated elastomeric members are preferably seated in grooves in one or the other of the mold members and are further adapted to substantially minimize or prevent flashing of the gasket material out of the mold cavity and also serve to accommodate variations in the shape of the window panels.

Additional objects, advantages and features of the present invention will become apparent from the following description and appended claims, taken in conjunction with the accompanying drawings.

Figure 1 is an elevational view of one preferred gasket and window panel assembly installed in a vehicle body panel and having a movable window panel hingedly and pivotally movable relative to a fixed window panel according to the present invention.

Figure 2 is a cross-sectional view taken along line 2—2 of Figure 1.

Figure 3 is an elevational view of an alternate gasket and window panel assembly similar to that of Figure 1, but having only a movable window panel.

Figure 4 is a cross-sectional view taken along line 4—4 of Figure 3.

Figure 5 is a partial perspective view of the rear window of a convertible top, illustrating still another alternate embodiment of the present invention.

Figure 6 is a schematic perspective view of a portion of a mold apparatus for molding the window gasket assembly of Figure 1.

Figure 7 is a partial cross-sectional view generally taken along line 7—7 of Figure 6, but with the window panels in place and the mold apparatus closed.

Figure 8 is a schematic diagram illustrating a reaction injection molding system for fabricating and bonding together the gasket and window panel assembly of Figure 1.

Figure 9 is a perspective view of an aftermixer and gating apparatus for a reaction injection molding apparatus in accordance with the present invention.

Figure 10 is a cross-sectional view taken along line 10—10 of Figure 9.

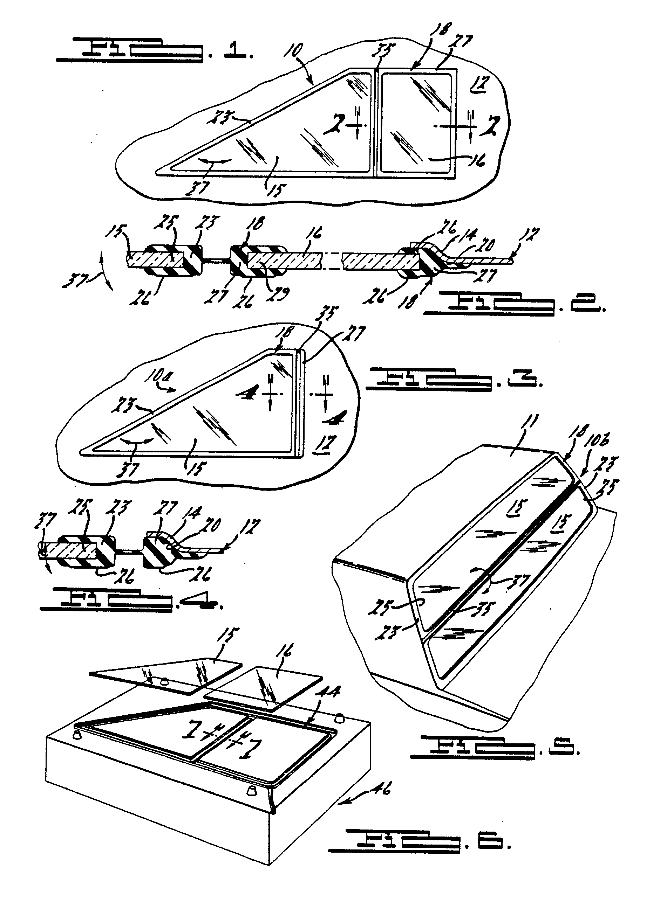

In Figures 1 through 10, exemplary embodiments of the present invention are illustrated for the reaction injection molding and bonding of integrally-molded vehicular window panel gasket assemblies, having flexible living hinges integrally molded therein, onto their associated glass or other substantially transparent window panels. One skilled in the art will readily recognize from the following discussion, however, that the principles of the invention are equally applicable to reaction injection molding and bonding of items other than vehicular window gaskets, as well as being applicable to apparatus other than the reaction injection molding system shown in the drawings.

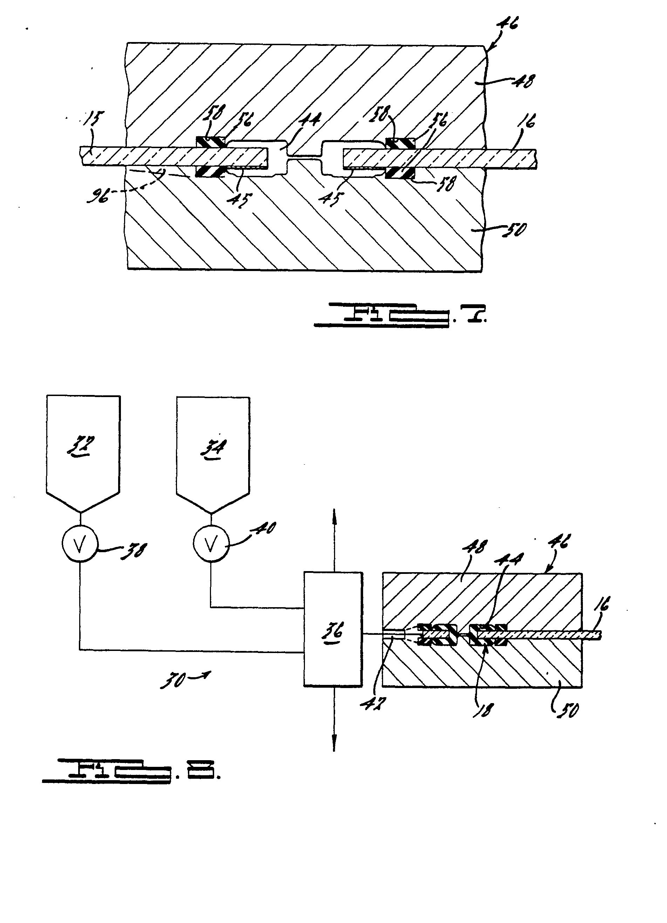

In Figures 1 and 2 an exemplary modular vehicular window assembly 10 generally includes at least one substantially transparent movable window panel 15, at least one substantially transparent fixed window panel 16, and a window gasket assembly 18. As illustrated in the drawings, the window panels 15 and 16 and the gasket assembly 18 are adapted to be sealingly disposed in a window opening in a vehicle body panel 12 or the like, with at least a fixed portion of the gasket assembly 18 bonded and secured directly to a recessed portion 14 of the peripheral area of the vehicle body surrounding the window opening with an adhesive material 10. Thus, the need is eliminated for mechanical fasteners protruding through apertures in the body or embedded in the gasket material. By eliminating the need for such fasteners, the cross-sectional profile of the gasket assembly 18 may be minimized in order to provide a smooth relatively unobtrusive fit with the vehicle body panel 12, thereby reducing the aerodynamic drag on the vehicle. Also, because the gasket and window panel assembly is secured and bonded substantially continuously around at least a substantial portion of the periphery of the fixed window panel 16, the window panel 16 effectively becomes part of the body structure and is not subjected to the localized stress concentrations caused by discrete mechanical fasteners. Thus at least the window panel 16 can be thinner and lighter in weight than those previously used. If direct bonding between the body panel 12 and the window panel 16 is also desired, the window gasket assembly 18 may optionally be formed with a channel-shaped opening 24 extending therethrough in order to allow a suitable adhesive to bond the window panel 16 directly to the recessed portion 14. Such optional channel-shaped opening 24 may consist of either a single opening extending continuously throughout the entire window gasket assembly 18, or a series of discrete channel-shaped openings at spaced locations throughout the window gasket assembly.

As will become apparent from the discussion below, the window gasket assembly 18, which is preferably composed of urethane or a urethane-containing material, may also optionally include a coating of pigmented material either on its entire exterior surface, or on a predetermined portion thereof, as illustrated by reference numeral 26. Such coating of pigmented material can be applied to the window gasket assembly 18 during the molding process in order to provide a decorative stripe on its exterior surface or to color the window gasket member in order to complement the color scheme of the vehicle.

As shown in the drawings, the exemplary gasket assembly 18 illustrated in Figures 1 and 2 includes a movable gasket member 23 secured and bonded to at least a portion of the peripheral edge area 25 of the movable window panel 15 and a fixed gasket member 27 secured and bonded to at least a portion of the peripheral edge area 29 of the fixed window panel 16. A flexible living hinge web 35 interconnectably extends between the movable and fixed gasket members 23 and 27, respectively, and is integrally molded in a one-piece structure therewith. The hinge web 36 functions to hingedly and pivotally attach the movable gasket member 23 and the movable window panel 15 to the body panel 12 for opening and closing pivotal movement as indicated by arrow 37.

It should be noted that although both the movable and fixed gasket members 23 and 27 are shown in the various figures herein as being integrally molded and bonded substantially continuously around substantially the entire peripheral edge areas of their respective window panels 15 and 16, at least the movable window panel 15 may alternatively have its gasket member 23 integrally molded and bonded only along the portion of the edge area 25 that is generally adjacent the living hinge web 35. In such an alternate embodiment, the remainder of the edge area 25 would be bare and would sealingly abut or engage a sealing member on the peripheral area of the body panel 12 surrounding the window opening when in its closed position.

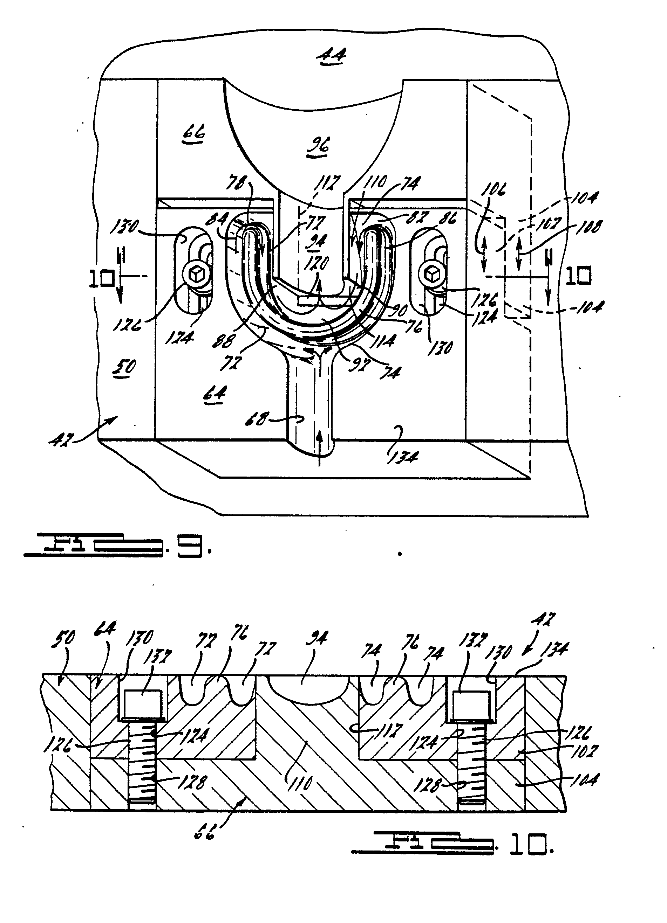

Figures 3 and 4 illustrate an exemplary alternate modular vehicular window assembly 10a according to the present invention. Window assembly 10a is similar to window assembly 10b of Figures 1 and 2, but has only a single window panel hingedly and pivotally disposed in the vehicle body panel 12. The same reference numerals are used for the corresponding elements in the various embodiments shown in the drawings for purposes of illustrating some examples of the many applications of the present invention.

Like the window assembly 10 of Figures 1 and 2, the window assembly 10a of Figures 3 and 4 generally includes a substantially transparent movable window panel 15 and a window gasket assembly 18. The gasket assembly 18 includes a movable gasket member 23 bonded and secured to at least a portion of the peripheral edge area 25 of the movable window panel 15 and a fixed gasket member 27 secured and bonded directly to the recessed portion 14 of the peripheral area of the body panel 12 surrounding the window opening with an adhesive material 20. Thus, the need is eliminated for mechanical fasteners protruding through apertures in the body or embedded in the gasket material.

A flexible living hinge web 37 interconnectably extends between the movable and fixed gasket members 23 and 27, respectively, in Figures 3 and 4 and is integrally molded in a one-piece structure therewith. The hinge web 37 functions to hingedly and pivotally attach the movable gasket member 23 and the movable window panel 15 to the body panel 12 for opening and closing pivotal as indicated by arrow 37.

Still another example of the many varied applications of the present invention is the modular vehicular window assembly 10b illustrated in Figure 5. Window assembly 10b is a foldable rear window assembly for either a soft or hard convertible top 11 and generally includes at least a pair of movable window panels 15 and a window gasket assembly 18. Each of the window panels 15 has a movable gasket member 23 secured and bonded to at least a portion of their respective peripheral edge areas 25. The movable gasket members 23 are interconnected along generally adjacent sides by a flexible living hinge web 35, which is integrally molded in a one-piece structure therewith. The hinge web 35 functions to allow the movable gasket members 23 and the movable window panels 15 to hingedly and pivotally move relative to one another, as indicated by the arrow 37, as the convertible top 11 is raised or lowered. The sides of the gasket assembly 18 generally adjacent the top 11 are preferably bonded and secured directly to the top 11 itself, or directly to a suitable frame or reinforcing member thereon, with an adhesive material without the need for mechanical fasteners as discussed above in connection with other embodiments of the invention. It may be desirable in this or other applications to mold and bond urethane gasket members, interconnected by an integral living hinge web, only to adjacent edges of adjacent window panels without including such gasket members on the remaining peripheral edges of the window panels.

The window gasket member 18 is molded from a multi-constituent urethane material, such as the preferred liquid multi-constituent material for example, in a suitable reaction injection molding apparatus such as the mold apparatus 46 schematically illustrated in Figures 6 and 7, for example. Such urethane material may be composed, for example, of a polyol resin constituent, an isocyanate constituent, and a catalyst. Examples of commercially-available polyol resins are manufactured by The Down Chemical Company under the trademark Voranol and by Texaco Chemical Company under the trademark Thanol SF-6503. Examples of commercial isocyanates are produced by The Upjohn Company under the trademark Isonate 143L, Isonate 181, Isonate 191 and Isonate 240, and also by Mobay Chemical Corporation under the trademarks Mondur PF and Mondur CD. An example of a suitable catalyst for such urethane material is marketed by Witco Chemical Company under the trademark Witco Fomrez UL-28.

As illustrated schematically by the reaction injection molding system 30 in Figure 8, the constituents of the window gasket material are injected from two or more constituent sources 32 and 34 into a high-pressure mixing apparatus 36 by way of the respective metering devices 38 and 40. The constituents of the material are mixed in the high-pressure mixing apparatus 36 at pressures in the range of approximately 2000 p.s.i.g. to approximately 3000 p.s.i.g. and are conveyed to an aftermixer and gating apparatus 42. As discussed below, the aftermixer and gating apparatus 42 further mixes the constituents of the gasket material and reduces its pressure to a range of approximately 30 p.s.i.g. to approximately 100 p.s.i.g., and preferably approximately 50 p.s.i.g., before introducing the material into a mold cavity 44 of a mold apparatus 46.

Prior to the injection of the multi-constituent gasket material into the mold apparatus 46, the mold cavity 44 is preferably coated with any of a number of known mold release agents, which typically consist of low-melting point waxes or silicon oils, for example. Commercial examples of mold release agents are produced by Contour Chemical Company under the trademark Kraxo 1711, Exitt II, Trulease 125, Lifft and Nonstickenstoffe, by Frekote Inc. under the trademarks Frekote 34, Frekote 34H, Frekote 31, and Frekote 31H, and by Park Chemical Company under the trademark PRC789. The volatile mold release agent is then allowed to at least partially flash off of the mold apparatus 46 which is typically at a temperature in the range of approximately 110F to approximately 160F.

If desired, all of the mold cavity surface, or a predetermined portion thereof, may be coated with a pigmented material so that the pigmented material will be transferred in the mold to the desired surface or surfaces of the gasket assembly 18 (or other molded article) during the reaction injection molding process. An example of such pigmented material coating is manufactured by Sherwin Williams Company under the trademark Polane. After the pigmented material coating has been allowed to flash off, the window panel 16 (glass or other transparent material) is positioned in the mold, adhesive means is applied as described below, and the mold members 48 and 50 of the mold apparatus 46 are closed, substantially in mutual engagement with one another. The constituents of the gasket material are injected into the system, mixed and introduced into the mold cavity 44 as described above, and the window panel or panels with the window gasket assembly 18 integrally molded thereon is then removed.

As is known to those skilled in the reaction injection molding art, the intermixed constituents of the molding material undergo a rapid and highly exothermic reaction in the mold cavity and are approximately 70% cured within a very short time, generally less than one to six minutes, depending upon the catalyst employed. After such time, the molded article may be removed from the molding apparatus and allowed to cool at ambient temperatures.

As illustrated in Figure 7, at least one, and preferably both, of the mold members 48 and 50 include an elongated elastomeric bead member 56 compressingly seated within a corresponding groove 58. The grooves 58 are positioned generally adjacent the peripheral edges of the mold cavity 44 so that the elastomeric members 56 compressingly engage and sealingly support either the opposite mold member or the window panel or panels and also substantially prevent or minimize flashing of the molding material out from the mold cavity 44. When the mold apparatus 46 is open, the elastomeric members 56 preferably protrude slightly from their associated grooves 58 so that the force required to hold the mold members 48 and 50 together in a sealing engagement is substantially reduced from the force that would be necessary if the mold members were required to be forced into direct contact with one another. Similarly, a significantly reduced pressure is exerted on the window panel or panels and consequently the frequency of breakage of the window panels is substantially minimized or eliminated. Such reduction in the force required to hold the mold members together is also significantly less than that required in conventional compression and injection molding processes. Additionally, the elastomeric members 56 are sufficiently flexible to allow for minor variations in the shape and contour of the window panel or panels and thereby sealingly isolate the mold cavity 44 regardless of such minor window panel variations.

As mentioned above, window gasket assembly 18, which is preferably urethane, is securely bonded to the preferably glass window panel or panels during the molding process. Prior to the injection or other introduction of the constituents of the gasket material into the mold recesses or cavity 44, the window panel or panels, or at least the appropriate portions of their peripheral edge areas, are cleaned to remove grease, release agents, or other residue or debris. Such cleaning is preferably done with an alkaline wash. If, however, the glass window panel or panels are already relatively clean and free of release agents a solvent wipe, of methylene chloride, for example, is applied.

Next a silane-containing material is applied, at least to the peripheral edge area portions and allowed to flash off for a period of approximately ten seconds to approximately thirty seconds. As is known to those skilled in the art, the exact time depends upon factors such as the mold temperature and the particular material used, for example. The peripheral edge area portions are then wiped to prevent the glass, or other transparent material, from clouding.

Prior to inserting the window panel or panels into the mold cavity 44, a primer material 45 is applied by wiping or spraying to at least one side of the peripheral edge area portions. A preferred example of the primer material 45 is Betaseal glass and metal primer 435.21, as manufactured by Essex Chemical Corporation, Specialty Chemicals Division. "Betaseal" is a registered trademark of Essex Chemical Corporation. The primer 45 is air-dried for approximately two minutes to approximately three minutes. The gasket material constituents are then injected or introduced into the mold cavity 44, which must be done within approximately 30 minutes after the primer is applied. The gasket assembly 18 is then molded as described above, and a strong adhesive and intermolecular bond is achieved.

It should be noted that although the primer 45 may alternately be applied to one or more of the opposite sides and/or edge of the peripheral edge area portions, in actually-constructed prototypes of the modular window assembly, the gasket assemblies 18 have been molded with the primer 45 on only one side of the peripheral edge area portions of the window panels and have been shown to exhibit an extremely strong and secure bond. Thus such single-sided application of the primer 45 is preferred in order to preserve materials and to minimize the handling of the window panels, thereby minimizing the potential for breakage and waste.

Figures 9 and 10 illustrate an improved aftermixer and gating apparatus 42, generally including an aftermixer block or body 64 and a gating block or body 66 position in one or the other of the mold members 48 or 50 for further mixing the constituents of the gasket material (preferably urethane) and admitting the material to the mold cavity 44.

The aftermixer body 64 includes at least one common inlet passageway 68 for receiving the gasket material from the high-pressure mixing apparatus 36 at a predetermined flow rate and pressure. The gasket material flows through the inlet passageway 68 into at least a pair of curvilinear mixing passageways 72 and 74 where it is separated into a corresponding number of flow streams. Such separation increases the turbulence of the gasket material flow and accordingly enhances the intermixing of its constituents. The mixing passageways 72 and 74 include a divider wall 76 therein, which form a generally serpentine path in the mixing passageways. Such serpentine path includes at least one bight portion 78 in the mixing passageway 72 and a similar bight portion 82 in the mixing passageway 74. Such bight portions cause the gasket material to substantially reverse its direction of flow, as indicated by the flow arrows 84 and 86, respectively, in order to increase the turbulence of each of the gasket material flow streams and enhance the intermixing of the constituents therein.

Once the gasket material flows through the mixing passageways 72 and 74, it enters a corresponding number of respective inlet openings 88 and 90 of at least one common mixing cavity 92. The flow streams from the mixing passageways are reunited in the mixing cavity 92, which again reverses the flow directions of the flow streams, increases their turbulence, and enhances the intermixing of the gasket material constituents. The reunited and intermixed gasket material from the mixing cavity is received by the inlet passageway 94 in the gating body, wherein it is conveyed through a diverging fan-gate passageway 96 to the mould cavity 44.

The aftermixer body 64 preferably includes a stepped or offset portion 102 adapted to slidingly engage a preferably corresponding stepped or offset portion 104 on the gating body 66, such that the aftermixer body 64 and the gating body 66 may be slidably and adjustably moved toward or away from one another as indicated by the arrows 106 and 108. The gating body 66 also includes an integrally-formed tongue portion 110 in which the gating inlet passageway 94 is formed. The tongue portion 110 is slidably received in a slot 112 in the aftermixer body 64 for slidable and adjustable movement therein as the aftermixer and gating bodies are adjustably moved as described above. The end portion 114 of the tongue portion 110 defines the exit portion of the mixing cavity 92 such that selective movement of the tongue portion 110 in the slot 112 allows the sizes of the mixing cavity 92 and its inlet openings 88 and 90 to be selectively altered as the aftermixer and gating bodies are selectively and adjustably moved. Thus the sizes of the mixing cavity and its inlet openings may be selectively and adjustably increased as the aftermixer and gating bodies are moved apart from one another, and correspondingly such sizes may be selectively and adjustably decreased as the aftermixer and gating bodies are moved toward one another. In order to fill the unoccupied gap in the slot 112 in the aftermixer body 64 after the aftermixer body has been adjustably moved away from the gating body 66, one or more shim members 120 are removably insertable into the slot adjacent the end portion 114 of the tongue 110.

The aftermixer body 64 is preferably provided with one or more elongated openings 124 therethrough for receiving a threaded fastener 126 extending therethrough. The threaded fastener is adapted to threadably engage a threaded aperture 128 in the gating body 66 and serves as a locking means for fixing a preselected position of the tongue portion 110 in the slot 112. Preferably, the aftermixer body 64 is also provided with countersunk portions 130 for allowing the head portions 132 of the fasteners 126 in a recessed relationship with the surface 134 of the aftermixer body 64.

The above-described selective adjustments to the size of the mixing cavity 92 and its inlet openings 94 and 96 allow for the selective alteration of the back-pressure exerted by the aftermixer and gating apparatus 42 on the gasket material flowing therethrough. Such alteration thereby allows for the selective optimization of the intermixing of the constituents of the gasket material for a predetermined flow rate and pressure of the material from the high-pressure mixing apparatus 36 shown schematically in Figure 8. By such adjustments, therefore, the user of the reaction injection molding system may "fine-tune" the process to achieve optimum intermixing and reaction of the constituents of the molding material as well as achieving greater control over the pressure at which the molding material is introduced into the mold cavity.

The foregoing discussion discloses and describes exemplary embodiments of the present invention. One skilled in the art will readily recognize from such discussion that various changes, modifications and variations may be made therein without departing from the scope of the invention as defined in the following claims.

**Claims**

1. A window assembly (10) having at least one substantially transparent movable window panel (15) and a window gasket assembly (18) for sealing between said transparent movable window panel and a window opening in a vehicle body panel (12), said gasket assembly including a fixed gasket member (27) adapted to be secured to a peripheral area of said body panel surrounding said window opening or to a fixed transparent window panel adjacent said window opening, a movable gasket member (23) integrally moulded onto at least a portion of the peripheral edge area of said window panel, said fixed and movable gasket members being interconnected by an integral flexible hinge web extending therebetween, said window panel (15) and said movable gasket member (23) being hingedly and pivotally movable relative to said fixed gasket member (27) and said body panel (12), characterised in that the fixed and movable gasket members and said hinge web are integrally reaction injection moulded in a one-piece structure from a multi-constituent urethane material onto at least said portion of said peripheral edge area (25, 29) of the or each window panel (15, 16) and bonded thereto.

2. An assembly according to claim 1, characterised in that said movable gasket member (23) is integrally moulded substantially continuously around substantially the entire peripheral edge area of the movable window panel (15) and bonded thereto.

3. A window assembly according to either preceding claim, characterised in that said fixed gasket member (27) is adapted to be bonded and secured directly to a peripheral area of said body panel (12) surrounding said window opening with an adhesive material without the use of a mechanical fastener device.

4. A window assembly according to any preceding claim, characterised in that at least one of said gasket members has a pigmented material on at least a portion of its external surface, said pigmented material being transferred to said at least one gasket member during the reaction injection moulding thereof.

5. A window assembly according to any preceding claim, characterised in that the or each window panel is bonded at one surface only to the respective gasket member.

6. A method of moulding a window gasket assembly onto at least a portion of the peripheral edge area of a window panel in a mould cavity (44) of a moulding system, said method comprising: positioning said window panel (15, 16) in a mould apparatus (46) defining said mould cavity (44) with said peripheral edge area extending into said mould cavity and closing said mould apparatus; injecting the constituents of said gasket (18) under pressure into said mould cavity, forming in said mould cavity a fixed gasket member, a movable gasket member, and a flexible living hinge web interconnectably extending therebetween, said movable gasket member being integrally formed and bonded onto at least said portion of said window panel peripheral edge area, said fixed and movable gasket members and said living hinge web being integrally formed as a one-piece structure; and removing said window panel from said mould cavity with said gasket member thereon after said material has at least partially cured in said mould cavity, characterised in that the gasket is reaction injection moulded from a multi-constituent urethane material, the constituents being injected under pressure into mixing means (36) at a predetermined flow rate and then conveyed through a gating device (42) from said mixing means into said mould cavity (44), and in that the window panel is positioned in said mould cavity with at least said portion of said peripheral edge area extending into said mould cavity being sealingly supported between flexible portions (56) of said moulding apparatus, the flexible portions of the moulding apparatus comprising elastomeric members (56) which are sufficiently flexible as to allow for minor variations in the shape or contour of the window panel or panels.

7. A method according to claim 6, characterised in that the constituents of said material are injected under pressure into a first mixing device (36) at a predetermined flow rate; and said pressurised material is then injected into an aftermixing device (42) in which it is separated into at least a pair of generally serpentine flow streams (72, 74) which are then reunited in a mixing cavity (92) in said aftermixer device before being fed into said mould cavity (44).

8. A method according to claim 7, characterised in that said aftermixer device includes means (102, 104) for selectively adjusting the size of said mixing cavity (92) in order to selectively alter the back-pressure of said aftermixer device on said material being conveyed therethrough, said method including the step of adjusting said mixing cavity to a preselected size prior to injecting the constituents of said material into said first mixing device, thereby selectively optimizing the intermixing of the constituents of said material for said predetermined flow rate.

9. A method according to claim 8, characterised in that said means for adjusting the size of said mixing cavity also includes means for adjusting the size of a number of mixing cavity inlet openings (88, 90), said number of mixing cavity inlet openings corresponding to the number of generally serpentine flow streams flowing into said mixing cavity, said step of adjusting the size of said mixing cavity also including the step of adjusting the size of said mixing cavity inlet openings to a preselected size.

10. A method according to any one of claims 6 to 9, characterised in that prior to the insertion into the mould cavity at least said portion of said window panel peripheral edge area is cleaned and has a primer (45) applied thereto.

11. A method according to claim 10, characterised in that said cleaning step comprises cleaning at least said preselected portion with an alkaline-containing material.

12. A method according to claim 10, characterised in that said cleaning step comprises wiping at least said preselected portion with a methylene chloride solvent.

13. A method according to claim 10, 11 or 12 characterised by the step of applying a silane-containing material to at least said preselected portion of said glass panel prior to applying said primer thereto.

14. A method according to claim 13, characterised by the steps of allowing said silane-containing material to flash off said preselected portion and then wiping said preselected portion prior to applying said primer thereto.

15. A method according to any one of claims 10 to 14, wherein the primer (45) is applied to one face only of the window panel.

16. A method according to any one of claims 10 to 15, characterised in that at least a predetermined portion of said mould cavity is coated with a pigmented material before said mould apparatus is closed in order to transfer said pigmented material to at least a corresponding predetermined portion of said gasket assembly.

17. A moulding system for moulding a window gasket assembly in a mould cavity, said system comprising a source (32, 34, 36, 42) of material to be moulded and mould apparatus (46) including a first mould member (48) and a second mould member (50) mutually engageable with one another and defining said mould cavity (44) therebetween, a first portion of said mould cavity being adapted to receive a portion of at least one substantially transparent window panel (15) inserted therein prior to the introduction of said material into said mould cavity in order to mould a movable portion (23) of said window gasket assembly in place on an edge portion of said window panel within said mould cavity, a second portion of said mould cavity being adapted to mould a fixed portion (27) of said window gasket assembly, and a third portion of said mould cavity being adapted to mould a living hinge web portion of said window gasket assembly in a one-piece integrally-moulded relationship with said fixed and movable gasket members, said living hinge web portion interconnectably extending between said fixed and movable gasket members, characterised in that the system is a reaction injection moulding system with the source being a source of multi-constituent urethane material in an intermixed pressurised flowable state, and in that the source includes means (36, 42) for receiving and intermixing said material constituents and for conveying said intermixed multi-constituent material to said mould cavity (44) at a predetermined pressure; at least one of said mould members (46, 50) includes at least one flexible elastomeric member (56) thereon generally adjacent an edge of said mould cavity (44) and extending generally around the periphery thereof, said elastomeric member supportingly engaging the other of said mould members and being adapted substantially to prevent flashing of said material out of said mould cavity, said mould cavity being adapted to receive at least one window panel (15) inserted therein prior to the introduction of said multi-constituent material into said mould cavity, said window panel being sealingly supported between a pair of said flexible elastomeric members which are sufficiently flexible as to allow for minor variations in the shape or contour of the window panel.

18. A moulding system according to claim 17, characterised by means for coating at least a predetermined portion of said mould cavity with a pigmented material prior to conveying said multi-constituent material thereto.

19. A moulding system according to claim 17 or 18, characterised in that said source includes at least one aftermixing and gating apparatus (42) for further mixing said partially mixed multi-constituent material and for conveying said material from said source (32, 34, 36) to said mould cavity (44), said apparatus including a common inlet passageway (68), at least a pair of generally serpentine mixing passageways (72, 74) in fluid communication with said common inlet passageway, a common mixing cavity (92) in fluid communication with said mixing passageways, said common mixing cavity having cavity inlet openings (88, 90) for receiving said material from said mixing passageways, a gating passageway (94) in fluid communication with said mixing cavity for receiving said multi-constituent urethane material therefrom and for conveying said multi-constituent urethane material to said mould cavity, and adjustment means for selectively altering the size of said cavity inlet openings.

20. A moulding system according to claim 19, characterised in that said aftermixing and gating apparatus includes an aftermixer body (64) and a gating body (66) slidably connected thereto, at least a portion of said gating passageway (94) being formed in a tongue portion (110) of said gating body, said mixing body having a slot (112) formed therein, said slot extending from said mixing cavity (92) generally toward said gating body and being adapted to slidably receive said tongue portion of said gating body therein, an end (114) of said tongue portion (110) being configured to define a portion of said mixing cavity so that the sizes of said mixing cavity (92) and cavity inlet openings (88, 90) increase as said tongue portion is slidably moved in said slot in a direction away from the mixing cavity and the sizes of said mixing cavity and cavity inlet openings decrease as said tongue portion is slidably moved in said slot in a direction toward said mixing cavity.

21. A moulding system according to claim 19, characterised by locking means (126) for fixing a preselected portion of said tongue portion in said slot, and shim means (120) insertable into said slot for substantially filling the unoccupied portion of said slot when said tongue portion is slidably moved in said direction away from said mixing cavity.

## Patentansprüche

1. Fensteraufbau (10) mit zumindest einer im wesentlichen transparenten, beweglichen Fensterscheibe (15) und einem Fensterdichtungsaufbau (18) zur Abdichtung zwischen der transparenten, beweglichen Fensterscheibe und einer Fensteröffnung in einer Fahrzeugkarosserietafel (12), welcher Dichtungsaufbau ein festes Dichtungsteil (27), das daran angepaßt ist, am Randbereich der Karosserietafel, die die Fensteröffnung umgibt oder an einer festen, bei der Fensteröffnung liegenden, transparenten Fensterscheibe befestigt zu werden und ein bewegliches Dichtungsteil (23) beinhaltet, das integral an zumindest einen Abschnitt des Randkantenbereiches der Fensterscheibe angeformt ist, wobei das feste und das bewegliche Dichtungsteil durch einen sich zwischen ihnen erstreckenden integralen, flexiblen Scharniersteg miteinander verbunden sind und wobei die Fensterscheibe (15) und das bewegliche Dichtungsteil (23) klapp- und schwenkbar bezüglich des festen Dichtungsteiles (27) und bezüglich der Karosserietafel (12) beweglich sind, dadurch gekennzeichnet, daß das feste und das bewegliche Dichtungsteil und der Scharniersteg integral in einer einstückigen Struktur aus einem vielbestandteiligen Urethanmaterial an zumindest den Abschnitt des Randkantenbereiches (25, 29) der oder jeder Fensterscheibe (15, 16) reaktionsgespritzt und mit diesen verbunden sind.

2. Aufbau nach Anspruch 1, dadurch gekennzeichnet, daß das bewegliche Dichtungsteil (23) im wesentlichen kontinuierlich um im wesentlichen den gesamten Randkantenbereich der beweglichen Fensterscheibe (15) herum integral geformt und damit verbunden ist.

3. Fensteraufbau nach einem der vorgenannten Ansprüche, dadurch gekennzeichnet, daß das feste Dichtungsteil (27) daran angepaßt ist, mit dem Randbereich der Karosserietafel (12), die die Fensteröffnung umgibt, verbunden und mit einem Klebstoffmaterial ohne die Anwendung von mechanischen Befestigungsmitteln daran befestigt zu werden.

4. Fensteraufbau nach einem der vorgenannten Ansprüche, dadurch gekennzeichnet, daß zumindest eines der Dichtungsteile ein pigmentiertes Material auf zumindest einem Abschnitt seiner äußeren Oberfläche aufweist, wobei das pigmentierte Material auf das zumindest eine Dichtungsteil während dessen Reaktionsspritzens übertragen wird.

5. Fensteraufbau nach einem der vorgenannten Ansprüche, dadurch gekennzeichnet, daß die oder jede Fensterscheibe nur an einer Oberfläche mit dem jeweiligen Dichtungsteil verbunden ist.

6. Verfahren zum Formen eines Fensterdichtungsaufbaus an zumindest einen Abschnitt des Randkantenbereiches einer Fensterscheibe in einem Formhohlraum (44) eines Formsystems mit folgenden Verfahrenschritten:
— Positionieren der Fensterscheibe (15, 16) in einer den Formhohlraum (44) bildenden Formvorrichtung (46), wobei der Randkantenbereich sich in den Formhohlraum hineinerstreckt und Schließen der Formvorrichtung;

— Einspritzen der Bestandteile der Dichtung (18) unter Druck in den Formhohlraum, in dem Formhohlraum Formen eines festen Dichtungsteiles, eines beweglichen Dichtungsteiles und eines flexiblen, beweglichen Scharniersteges, der sich verbindend dazwischen erstreckt, wobei das bewegliche Dichtungsteil integral geformt und mit zumindest dem besagten Abschnitt des Fensterscheibenrandkantenbereiches verbunden wird und wobei das feste und bewegliche Dichtungsteil und der bewegliche Scharniersteg als entstückige Struktur integral geformt werden; und

— Entfernen der Fensterscheibe aus dem Formhohlraum mit dem Dichtungsteil daran, nachdem das besagte Material zumindest teilweise in Formhohlraum ausgehärtet ist, dadurch gekennzeichnet, daß die Dichtung aus einem vielbestandteiligen Urethanmaterial reaktionsgespritzt ist, wobei die Bestandteile unter Druck in eine Mischvorrichtung (36) mit einer vorbestimmten Flußrate eingespritzt und anschließend über eine Angußvorrichtung (42) aus der Mischvorrichtung in den Formhohlraum (44) weitertransportiert werden und daß die Fensterscheibe im Formhohlraum so positioniert wird, daß sich zumindest der besagte Abschnitt des Randkantenbereiches in den Formhohlraum hineinerstreckt und dichtend zwischen flexiblen Abschnitten (56) der Formvorrichtung gehalten wird, wobei die flexiblen Abschnitte der Formvorrichtung elastische Teile (56) enthalten, die genügend flexibel sind, um geringfügige Variationen in der Form oder Kontur der Fensterscheibe oder -scheiben zu erlauben.

7. Verfahren nach Anspruch 6, dadurch gekennzeichnet, daß die Bestandteile des Materials mit einer vorbestimmten Flußrate unter Druck in einer erste Mischvorrichtung (36) eingespritzt werden und daß das unter Druck stehende Material anschließend in eine Nachmischvorrichtung (42) eingespritzt wird, in der es in zumindest ein Paar von im allgemeinen serpentinenartigen Flußströme (72, 74) aufgeteilt wird, die anschließend in einer Mischkammer (92) in der Nachmischvorrichtung wieder vereinigt werden, bevor sie in den Formhohlraum (44) eingespeist werden.

8. Verfahren nach Anspruch 7, dadurch gekennzeichnet, daß die Nachmischvorrichtung Mittel (102, 104) zur selektiven Einstellung der Größe der Mischkammer (92) enthält, um den Rückdruck der Nachmischvorrichtung auf das durch sie transportierte Material selektiv zu ändern, wobei das Verfahren den Verfahrensschritt des Einstellens der Mischkammer auf eine vorgewählte Größe vor dem Einspritzen der Bestandteile des Materials in die erste Mischvorrichtung enthält, um dadurch selektiv das Untermischen der Bestandteile des Material bezüglich einer vorbestimmten Flußrate zu optimieren.

9. Verfahren nach Anspruch 8, dadurch gekennzeichnet, daß die Mittel zur Einstellung der Größe der Mischkammer auch Mittel zum Einstellen der Größe einer Anzahl von Einlaßöffnungen (88, 90) der Mischkammer beinhalten, wobei die Anzahl der Einlaßöffnungen der Mischkammer der Anzahl der im allgemeinen serpentinenartigen Flußströme entspricht, die in diese Mischkammer fließen und wobei der Verfahrensschritt der Einstellung der Größe der Mischkammer auch den Verfahrensschritt der Einstellung der Größe der Einlaßöffnungen der Mischkammer auf eine vorgewählte Größe umfaßt.

10. Verfahren nach einem der Ansprüche 6 bis 9, dadurch gekennzeichnet, daß zumindest der besagte Abschnitt des Fensterscheibenrandkantenbereiches vor dem Einsetzen in den Formhohlraum gereinigt wird und eine darauf aufgebrachte Grundierung (45) aufweist.

11. Verfahren nach Anspruch 10, dadurch gekennzeichnet, daß der Reinigungsschritt eine Reinigung zumindest des vorgewählten Abschnittes mit einem basenhaltigen Material umfaßt.

12. Verfahren nach Anspruch 10, dadurch gekennzeichnet, daß der Reinigungsschritt ein Abwischen zumindest des vorgewählten Abschnittes mit einem Methylenchlorid-Lösungsmittel umfaßt.

13. Verfahren nach Anspruch 10, 11 oder 12, gekennzeichnet durch den Verfahrensschritt des Aufbringens eines silanhaltigen Materials auf zumindest den vorgewählten Abschnitt der Glasscheibe, bevor die Grundierung darauf aufgebracht wird.

14. Verfahren nach Anspruch 13, gekennzeichnet, durch die Verfahrensschritte, daß dem silanhaltigen Material erlaubt wird, den vorgewählten Abschnitt zu überfließen und daß anschließend der vorgewählte Abschnitt vor dem Aufbringen der Grundierung darauf abgewischt wird.

15. Verfahren nach einem der Ansprüche 10 bis 14, wobei die Grundierung (45) nur auf eine Seite der Glasscheibe aufgebracht wird.

16. Verfahren nach einem der Ansprüche 10 bis 15, dadurch gekennzeichnet, daß zumindest ein vorbestimmter Abschnitt des Formhohlraums mit einem pigmentierten Material beschichtet wird, bevor die Formvorrichtung geschlossen wird, um das pigmentierte Material auf zumindest einen entsprechenden, vorbestimmten Abschnitt des Dichtungsaufbaus zu übertragen.

17. Formsystem zum Formen eines Fensterdichtungsaufbaus in einem Formhohlraum, welches System eine Quelle (32, 34, 36, 42) des zu formenden Materials und eine Formvorrichtung (46) aufweist, die ein erstes Formteil (48) und ein zweites Formteil (50) umfaßt, die gegenseitig zueinander in Eingriff bringbar sind und zwischen sich den Formhohlraum (44) bilden, wobei

— ein erster Abschnitt des Formhohlraums daran angepaßt ist, einen Abschnitt von zumindest einer im wesentlichen transparenten Fensterscheibe (15) aufzunehmen, die darin eingesetzt wird, bevor das Material zur Formung eines beweglichen Abschnittes (23) des Fensterdichtungsaufbaus an der Stelle eines Kantenabschnittes der Fensterscheibe innerhalb des Formhohlraums in den Formhohlraum eingebracht wird,

— ein zweiter Abschnitt des Formhohlraums daran angepaßt ist, einen festen Abschnitt (27) des Fensterdichtungsaufbaus zu formen und

— ein dritter Abschnitt des Formhohlraums daran angepaßt ist, einen beweglichen Scharnierstegabschnitt des Fensterdichtungsaufbaus in einer einstückigen, integral geformten Verbindung zu dem festen und beweglichen Dichtungsteil zu formen, welcher bewegliche Scharnierstegabschnitt sich verbindend zwischen dem festen und dem beweglichen Dichtungsteil erstreckt, dadurch gekennzeichnet,

— daß das System ein Reaktionsspritzformsystem ist, wobei die Quelle eine Quelle eines vielbestandteiligen Urethanmaterials in einem vermischten, unter Druck stehenden, fließfähigen Zustand ist und

— daß die Quelle Vorrichtungen (36, 42) zum Aufnehmen und Vermischen der Materialbestandteile und zur Zuführung des vermischten, vielbestandteiligen Materials in den Formhohlraum (44) mit einem vorbestimmten Druck aufweist; zumindest eines der Formteile (46, 50) weist zumindest ein flexibles, elastisches Teil (56) auf das daran in allgemeinen an der Kante des Formhohlraums (44) liegt und sich im allgemeinen entlang deren Randes sich erstreckt, welches elastische Teil mit dem anderen der Formteile sich daran abstützend in Eingriff steht und daran angepaßt ist, das Ausfließen des Materials aus dem Formhohlraum in wesentlichen zu verhindern, wobei der Formhohlraum daran angepaßt ist, zumindest eine Fensterscheibe (15) aufzunehmen, die vor der Einführung des vielbestandteiligen Materials in den Formhohlraum darin eingesetzt wurde und wobei die Fensterscheibe dichtend zwischen einem Paar dieser flexibler, elastischer Teile gehalten ist, welche flexibel genug sind, geringfügige Variationen in der Form oder Kontur der Fensterscheibe zu erlauben.

18. Formsystem nach Anspruch 17, gekennzeichnet durch Mittel zur Beschichtung zumindest eines vorbestimmten Abschnittes des Formhohlraums mit einem pigmentierten Material, bevor das vielbestandteilige Material in diesen gefördert wird.

19. Formsystem nach Anspruch 17 oder 18 dadurch gekennzeichnet, daß die Quelle zumindest eine Nachmisch- und Angußvorrichtung (42) zum weiteren Mischen des teilweise gemischten, vielbestandteiligen Materials und zum Befördern des Materials von der Quelle (32, 34, 36) in den Formhohlraum (44) umfaßt, wobei die Vorrichtung eine gemeinsame Einlaßöffnung (68), zumindest ein Paar von im allgemeinen serpentinenförmigen Mischgängen (72, 74) in fluidischer Verbindung mit der gemeinsamen Einlaßöffnung und eine gemeinsame Mischkammer (92) in fluidischer Verbindung mit den Mischgängen aufweist, wobei die gemeinsame Mischkammer Kammereinlaßöffnungen (88, 90) zum Aufnehmen des Materials aus den Mischgängen, eine Angußöffnung (94) in fluidischer Verbindung mit der Mischkammer zur Aufnahme des vielbestandteile Urethanmaterial daraus und zum Befördern des vielbestandteiligen Urethanmaterials in den Formhohlraum sowie Einstellmittel zum selektiven Ändern der Größe der Kammereinlaßöffnungen aufweist.

20. Formsystem nach Anspruch 19, dadurch gekennzeichnet, daß die Nachmisch- und Angußvorrichtung einen Nachmischkörper (64) und einen Angußkörper (66) enthält, der mit ersterem gleitbar verbunden ist, wobei zumindest ein Abschnitt der Angußöffnung (94) in einem Zungenabschnitt (110) des Angußkörpers gebildet ist, wobei der Mischkörper einen darin eingeformten Schlitz (112) aufweist, der sich von der Mischkammer (92) in allgemeinen zum Angußkörper erstreckt und der daran angepaßt ist, den Zungenabschnitt des Angußkörpers darin aufzunehmen, wobei ein Ende (114) des Zungenabschnittes (110) so gestaltet ist, daß es einen Abschnitt der Mischkammer bildet, so daß sich die Größen der Mischkammer (92) und der Kammereinlaßöffnungen (88, 90) vergrößern, wenn der Zungenabschnitt im Schlitz gleitend in Richtung weg von der Mischkammer bewegt wird und daß sich die Größen der Mischkammer und der Kammereinlaßöffnungen verringern, wenn der Zungenabschnitt im Schlitz gleitend in Richtung auf die Mischkammer zu bewegt wird.

21. Formsystem nach Anspruch 19, gekennzeichnet durch
— Verriegelungsmittel (126) zur Befestigung eines vorgewählten Abschnittes des Zungenabschnittes in dem Schlitz und
— Füllstücke (120), die in den Schlitz einsetzbar sind, um im wesentlichen den nicht besetzten Abschnitt des Schlitzes zu füllen, wenn der Zungenabschnitt gleitend in Richtung weg von der mischkammer bewegt wird.

**Revendications**

1. Ensemble de fenêtre (10) ayant au moins un panneau de fenêtre mobile pratiquement transparent (15) et un ensemble de garniture d'étanchéité de fenêtre (18) pour réaliser une étanchéité entre ce panneau de fenêtre mobile transparent et une ouverture de fenêtre dans un panneau de carrosserie de véhicule (12), cet ensemble de garniture comportant un élément de garniture fixe (27) adapté pour être fixé sur une zone périphérique du panneau de carrosserie entourant l'ouverture de la fenêtre ou sur un panneau de fenêtre transparent fixe adjacent à cette ouverture de fenêtre, un élément de garniture d'étanchéité mobile (23) moulé d'un seul tenant sur au moins une portion de la zone marginale périphérique du panneau de fenêtre, ces éléments de garniture respectivement fixe et mobile étant reliés entre eux par une bande d'articulation flexible d'un seul tenant s'étendant entre eux, ce panneau de fenêtre (15) et cet élément de garniture mobile (23) pouvant pivoter par rapport à l'élément de garniture fixe (27) et au panneau de carrosserie (12), caractérisé en ce que les éléments de garniture fixe et mobiles et la bande d'articulation sont moulés par réaction-injection d'un seul tenant en une structure unitaire à partir d'une matière à base d'uréthane à plusieurs constituants, sur au moins cette portion de la zone marginale périphérique (25, 29) du ou de chaque panneau de fenêtre (15, 16) et y sont collés.

2. Ensemble selon la revendication 1, caractérisé en ce que l'élément de garniture d'étanchéité mobile (23) est moulé d'un seul tenant de façon pratiquement continue autour de pratiquement toute la zone marginale périphérique du panneau de fenêtre mobile (15) et y est collé.

3. Ensemble de fenêtre selon l'une quelconque des revendications précédentes, caractérisé en ce que l'élément de garniture fixe (27) est adapté pour être collé et fixé directement sur une zone périphérique du panneau de carrosserie (12) entourant l'ouverture de la fenêtre avec un adhésif et sans utiliser de dispositifs de fixation mécaniques.

4. Ensemble de fenêtre selon l'une quelconque des revendications précédentes, caractérisé en ce qu'au moins l'un des éléments de garniture présente une matière pigmentée sur au moins une portion de sa surface extérieure, cette matière pigmentée étant transférée sur ledit élément de garniture pendant son moulage par réaction-injection.

5. Ensemble de fenêtre selon l'une quelconque des revendications précédentes, caractérisé en ce qu'une surface seulement du ou de chaque panneau de fenêtre est collée sur l'élément de garniture d'étanchéité respectif.

6. Procédé pour mouler un ensemble de garniture d'étanchéité de fenêtre sur au moins un portion de la zone marginale périphérique d'un panneau de fenêtre dans une cavité de moule (44) d'un système de moulage, ce procédé comportant les stades suivants: placer le panneau de fenêtre (15, 16) dans un appareil de moulage (46) définissant la cavité de moule (44) avec sa zone marginale périphérique s'étendant dans la cavité de moule et fermer l'appareil de moulage, injecter les constituants de la garniture d'étanchéité (18) sous pression dans la cavité de moule, former dans cette cavité de moule un élément de garniture fixe, un élément de garniture mobile et une bande d'articulation pivotante flexible s'étendant entre eux et les reliant, l'élément de garniture mobile étant formé d'une seule pièce et collé sur au moins ladite portion de la zone marginale périphérique du panneau de fenêtre, ces éléments de garniture, fixe et mobile, et cette bande d'articulation pivotante étant formée d'une seule pièce sous forme d'une structure d'un seul tenant, et enlever le panneau de fenêtre de la cavité du moule avec l'élément de garniture sur le panneau après que la matière a au moins partiellement pris dans la cavité du moule, caractérisé en ce que la garniture d'étanchéité est moulée par réaction-injection à partir d'une matière à base d'uréthane à plusieurs constituants, les constituants étant injectés sous pression dans des moyens de mélange (36) à un débit prédéterminé et ensuite transporté à travers un dispositif d'introduction (42) depuis les moyens de mélange jusque dans la cavité de moule (44) et en ce que le panneau de fenêtre est disposé dans la cavité de moule avec au moins ladite portion de cette zone marginale périphérique s'étendant dans la cavité de moule supportée de façon étanche entre des portions flexibles (56) de l'appareil de moulage, les portions flexibles de l'appareil de moulage comportant des éléments élastomères (56) qui sont suffisamment flexibles pour tenir compte de petites variations dans la forme ou le contour du(des) panneau(x) de fenêtre.

7. Procédé selon la revendication 6, caractérisé en ce que les constituants de cette matière sont injectés sous pression dans un premier dispositif de mélange (36) à un débit prédéterminé et en ce que cette matière sous pression est ensuite injectée dans un dispositif de post-mélange (42) dans lequel elle est séparée en au moins deux courants sinueux (72, 74), qui sont ensuite réunis dans une cavité de mélange (92) dans le dispositif de poste-mélange, avant d'être amenés dans la cavité de moule (44).

8. Procédé selon la revendication 7, caractérisé en ce que ce dispositif de post-mélange comporte des moyens (102, 104) pour régler sélectivement la dimension de la cavité de mélange (92) afin de modifier sélectivement la contre-pression de ce dispositif de post-mélange sur la matière qui y est transportée, ce procédé comportant un stade dans lequel on règle la cavité de mélange à une dimension présélectionnée avant d'injecter les constituants de cette matière dans le premier dispositif de mélange, optimisant ainsi sélectivement le mélange des constituants de la matière pour le débit prédéterminé.

9. Procédé selon la revendication 8, caractérisé en ce que les moyens pour régler la dimension de la cavité de mélange comportent également des moyens pour régler la dimension d'un certain nombre d'ouvertures d'entrée (88, 90) dans cette cavité de mélange, ce nombre d'ouvertures d'entrée correspondant au nombre de courants sinueux arrivant dans la cavité de mélange, ce stade de réglage de la dimension de la cavité de mélange comportant également le stade dans lequel on ajuste à une dimension présélectionnée la dimension des ouvertures d'entrée dans la cavité de mélange.

10. Procédé selon l'une quelconque des revendications 6 à 9, caractérisé en ce que, avant d'être introduite dans la cavité de moule, au moins cette portion de la zone marginale périphérique du panneau de fenêtre est nettoyée et qu'on y applique une couche primaire (45).

11. Procédé selon la revendication 10, caractérisé en ce que le stade de nettoyage consiste à nettoyer au moins cette portion présélectionnée avec une matière contenant une substance alcaline.

12. Procédé selon la revendication 10, caractérisé en ce que ce stade de nettoyage consiste à essuyer au moins cette portion présélectionnée avec un solvant à base de chlorure de méthylène.

13. Procédé selon l'une des revendications 10, 11 ou 12, caractérisé en ce qu'on applique une matière contenant un silane sur au moins cette portion présélectionnée du panneau de verre avant application sur lui de la couche primaire.

14. Procédé selon la revendication 13, caractérisé en ce qu'on laisse la matière contenant du silane s'évaporer de cette portion présélectionnée et qu'on essuie ensuite cette portion présélectionnée avant de lui appliquer la couche primaire.

15. Procédé selon l'une quelconque des revendications 10 à 14, dans laquelle la couche primaire (45) est appliquée sur seulement une face du panneau de fenêtre.

16. Procédé selon l'une quelconque des revendications 10 à 15, caractérisé en ce qu'au moins une portion prédéterminée de la cavité de moule est revêtue d'une matière pigmentée avant la fermeture de l'appareil de moulage afin de transférer cette matière pigmentée sur au moins une portion prédéterminée correspondante de l'ensemble de garniture.

17. Système de moulage pour mouler un ensemble de garniture d'étanchéité de fenêtre dans une cavité de moule, ce système comprenant une source (32, 34, 36, 42) de matière à mouler et un appareil de moulage (46) comprenant un premier élément de moule (48) et un deuxième élément de moule (50) pouvant mutuellement coopérer l'un avec l'autre et délimitant entre eux la cavité de moule (44), une première portion de cette cavité de moule étant adaptée pour recevoir une portion d'au moins un panneau de fenêtre pratiquement transparent (15) qui est introduit avant introduction de la matière dans la cavité de moule afin de mouler une portion mobile (23) de l'ensemble de garniture d'étanchéité de fenêtre en place sur une portion marginale de ce panneau de fenêtre, à l'intérieur de la cavité de moule, une deuxième portion de la cavité de moule étant adaptée pour mouler une portion fixe (27) de cet ensemble de garniture de fenêtre, et une troisième portion de cette cavité de moule étant adaptée pour mouler une portion de bande d'articulation privotante de l'ensemble de garniture d'étanchéité de fenêtre en une structure d'un seul tenant avec les éléments de garniture fixe et mobile, cette portion de bande d'articulation pivotante s'étendant entre les éléments de garniture fixe et mobile et les reliant entre eux, caractérisé en ce que le système est un système de moulage par réaction-injection, la source étant une source de matière à base d'uréthane à plusieurs constituants dans un état mélangé fluide sous pression et en ce que la source comporte des moyens (36, 42) pour recevoir et mélanger entre eux les constituants de la matière et pour transporter cette matière à plusieurs constituants mélangés dans la cavité de moule (44) à une pression prédéterminée, en ce qu'au moins l'un des éléments de moule (46, 50) comporte au moins un élément élastomère flexible (56) généralement adjacent à un bord de la cavité de moule (44) et s'étendant généralement autour de sa périphérie, cet élément élastomère coopérant en le supportant avec l'autre élément de moule et étant adapté pour empêcher pratiquement toute bavure de matière hors de la cavité de moule, cette cavité de moule étant adaptée pour recevoir au moins un panneau de fenêtre (15) qui est introduit avant introduction de la matière à plusieurs constituants dans la cavité de moule, ce panneau de fenêtre étant supporté de façon étanche entre deux éléments èlastomères flexibles qui sont suffisamment flexibles pour tenir compte de petites variations dans la forme ou le contour du panneau de fenêtre.

18. Système de moulage selon la revendication 17, caractérisé par des moyens pour revêtir au moins une portion prédéterminée de cette cavité de moule avec une matière pigmentée avant d'y transporter la matière à plusieurs constituants.

19. Système de moulage selon la revendication 17 ou la revendication 18, caractérisé en ce que cette source comporte au moins un appareil de post-mélange et d'introduction (42) pour mélanger davantage cette matière à plusieurs constituants partiellement mélangés et pour transporter cette matière de la source (32, 34, 36) dans la cavité de moule (44), cet appareil comportant un passage d'entrée commun (68), au moins deux passages de mélange sinueux (72, 74) communiquant avec ce passage d'entrée commun, une cavité de mélange commune (92) communiquant avec ces passages de mélange, cette cavité de mélange commune ayant des ouvertures d'entrée (88, 90) pour recevoir la matière des passages de mélange, un passage d'introduction (94) communiquant avec la cavité de mélange pour en recevoir la matière à base d'uréthane à plusieurs constituants et pour transporter cette matière dans la cavité de moule, et des moyens de réglage pour modifier sélectivement la dimension des ouvertures d'entrée dans la cavité.

20. Système de moulage selon la revendication 19, caractérisé en ce que cet appareil de post-mélange et d'introduction comporte un corps de post-mélange (64) et un corps d'introduction (66) qui lui est raccordé par glissement, au moins une portion de ce passage d'introduction (94) étant formée en une portion de col (110) de ce corps d'introduction, une fente (112) étant formée dans le corps de post-mélange, cette fente s'étendant depuis la cavité de mélange (92) de façon générale en direction du corps d'introduction et étant adaptée pour recevoir à coulissement cette portion de col du corps d'introduction, une extrémité (114) de cette portion de col (110) étant configurée pour définir une portion de la cavité de mélange, de telle sorte que les dimensions de la cavité de mélange (92) et des ouvertures d'entrée (88, 90) dans cette cavité augmentent lorsque cette portion de col est déplacée en coulissant dans la fente dans une direction qui l'éloigne de la cavité de mélange et que les dimensions de cette cavité de mélange et des ouvertures d'entrée dans cette cavité diminue lorsque la portion de col est déplacée en coulissant dans la fente en direction de cette cavité de mélange.

21. Système de moulage selon la revendication 19, caractérisé en ce que des moyens de verrouillage (126) sont prévus pour fixer une portion présélectionnée de cette portion de col dans la fente et que des moyens de cales (120) peuvent être introduits dans cette fente pour remplir pratiquement la portion inoccupée de la fente lorsque la portion de col est déplacée en coulissement dans cette direction qui l'éloigne de la cavité de mélange.

FIG. 1.

FIG. 2.

FIG. 3.

FIG. 4.

FIG. 5.

FIG. 6.

FIG. 7.

FIG. 8.

2

FIG.9.

FIG.10.